# EUROPEAN PATENT APPLICATION

(11) **EP 2 502 878 A2**
(43) Date of publication of application: **26.09.2012**
(21) Application number: 11178336.1
(22) Date of filing: 22.08.2011
(51) Int. Cl.: C01B 3/06

(54) **Solid hydrogen fuel with initial heating mechanism**

(30) Priority: 25.03.2011 TW 100110318
(71) Applicant: Industrial Technology Research Institute, Chutung Hsinchu 31040 (TW)
(72) Inventor: Ku, Jie-Ren, 807 Kaohsiung City (TW); Tsai, Shing-Fen, 744 Tainan City (TW); Hsueh, Chan-Li, 852 Kaohsiung City (TW); Chen, Cheng-Yen, 710 Tainan City (TW); Lu, Yu-Wen, 718 Tainan City (TW); Tsau, Fanghei, 802 Kaohsiung City (TW); Tu, Chung-Ching, 708 Tainan City (TW); Wu, Chia-Cheng, 852 Kaohsiung City (TW); Chen, Yih-Hang, 241 New Taipei City (TW)
(74) Representative: Schulz, Dirk

(57) **Abstract**

An embodiment of the invention provides a solid hydrogen fuel with an initial heating mechanism, including: a solid hydrogen fuel; and a heating promoter disposed on at least one surface of the solid hydrogen fuel, wherein the heating promoter proceeds with an exothermal reaction when contacted with water. Another embodiment of the invention provides: a solid hydrogen fuel with an initial heating mechanism, including a solid hydrogen fuel; and an electrical heating element in contact with the solid hydrogen fuel.

## Description

### CROSS REFERENCE TO RELATED APPLICATIONS

This Application claims priority of Taiwan Patent Application No. 100110318, filed on March 25, 2011, the entirety of which is incorporated by reference herein.

### BACKGROUND OF THE INVENTION

### Field of the Invention

The present invention relates to a solid hydrogen fuel, and in particular relates to a solid hydrogen fuel with an initial heating mechanism.

### Description of the Related Art

In recent years, power sources for portable devices, such as personal computers, cameras, or other kinds of digital devices, have been required to be cheap, long-lasting, light in weight, and suitable for use in all kinds of environments. Although fuel cells are cheap and long-lasting, their applications are limited by the supply of hydrogen fuel. Therefore, fuel cells can not be broadly applied to all kinds of portable devices, and it is desired to solve this problem. Hydrogen fuel is required to be cheap, long-lasting, and light in weight, and have a stable hydrogen releasing rate. An advantage of using chemical hydrogen storage materials as a hydrogen source is that chemical hydrogen storage materials provide high density of hydrogen storage. As a result, there is a trend to develop solid hydrogen fuel materials.

For solid hydrogen fuels, hydrides are subjected to a hydrolysis reaction to release hydrogen and heat after contact with water. During reaction, temperature of the solid hydrogen fuel increases, which in turn, increases the hydrogen releasing rate of the hydrogen supplying device. However, although the hydrolysis reaction is an exothermal reaction, it takes some time for the solid hydrogen fuel to reach a temperature that is high enough for a desirable hydrogen releasing rate. In other words, a conventional hydrogen supply source using solid hydrogen fuels requires a "turn-on" time to reach a desired power. Therefore, the conventional hydrogen fuel is not suitable for use as power sources for electronic devices.

Accordingly, it is desirable to provide a hydrogen supply source which can reach a desired hydrogen releasing rate in a shorter period of time.

### BRIEF SUMMARY OF THE INVENTION

An embodiment of the invention provides a solid hydrogen fuel with an initial heating mechanism, comprising: a solid hydrogen fuel; and a heating promoter disposed on at least one surface of the solid hydrogen fuel, wherein the heating promoter proceeds with an exothermal reaction when contacted with water.

Another embodiment of the invention provides a solid hydrogen fuel with an initial heating mechanism, comprising: a solid hydrogen fuel; and a heating promoter disposed outside of the solid hydrogen fuel, wherein the heating promoter proceeds with an exothermal reaction when contacted with water to serve as a heating source.

Still another embodiment of the invention provides a solid hydrogen fuel with an initial heating mechanism, comprising: a solid hydrogen fuel; and an electrical heating element in contact with the solid hydrogen fuel.

A detailed description is given in the following embodiments with reference to the accompanying drawings.

### BRIEF DESCRIPTION OF THE DRAWINGS

The present invention can be more fully understood by reading the subsequent detailed description and examples with references made to the accompanying drawings, wherein:

Figs. 1-3 are solid hydrogen fuels having heating promoters according to several embodiments of the invention.

Figs. 4-5 are solid hydrogen fuels having electrical heating elements according to several embodiments of the invention.

Fig. 6 is the reaction temperature of a solid hydrogen fuel according to an example and a comparative example of the invention.

Fig. 7 is the hydrogen releasing rate of solid hydrogen fuels according to an example and a comparative example of the invention.

Fig. 8 is the hydrogen releasing rate of a solid hydrogen fuel according to a comparative example of the invention.

Fig. 9 is the reaction temperature of a solid hydrogen fuel according to another example and a comparative example of the invention.

Fig. 10 is the hydrogen releasing rate of a solid hydrogen fuel according to another example and a comparative example of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

Moreover, the formation of a first feature over and on a second feature in the description that follows may include embodiments in which the first and second features are formed in direct contact, and may also include embodiments in which additional features may be formed between the first and second features, such that the first and second features may not be in direct contact.

In the invention, solid hydrogen fuels with an initial heating mechanism are provided. The additional initial heating mechanism can rapidly increase the reaction temperature of the solid hydrogen fuels, such that hydrogen releasing rate is improved. The initial heating mechanism may include a heating promoter disposed on the solid hydrogen fuel, a heating promoter disposed outside of the solid hydrogen fuel, or an electrical heating element in contact with the solid hydrogen fuel.

In one embodiment, a heating promoter is disposed on at least one surface of the solid hydrogen fuel to increase the initial hydrogen releasing rate of a hydrogen supplying device. The heating promoter releases a great amount of heat when contacting water, to rapidly increase the temperature of the solid hydrogen fuel. Therefore, the hydrogen releasing rate of solid hydrogen fuel also speeds up.

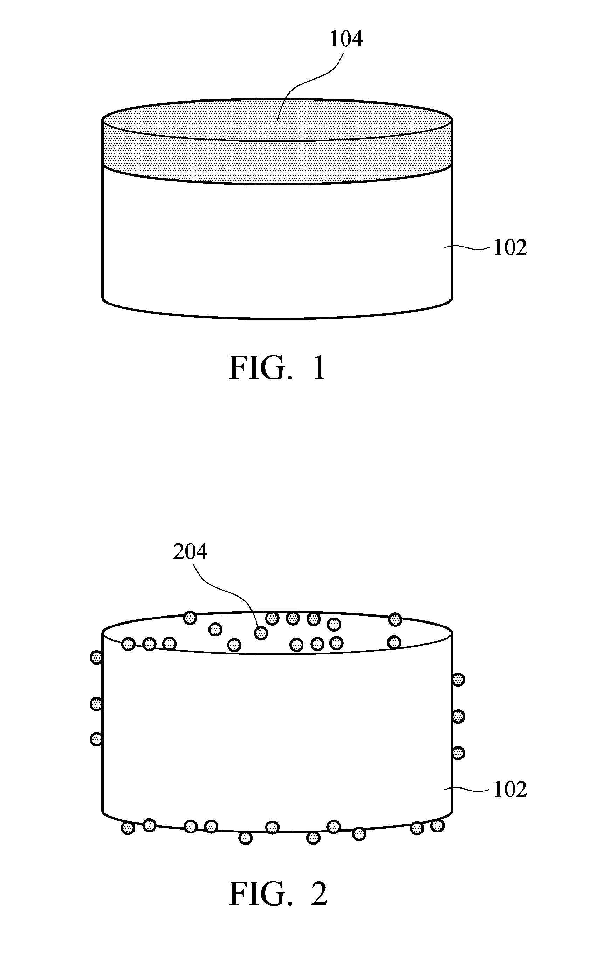

Fig. 1 illustrates a heating promoter 104 disposed on a solid hydrogen fuel 102. First, the solid hydrogen fuel 102 is formed. Then, the heating promoter 104 is disposed on the solid hydrogen fuel 102. The heating promoter 104 is a thin film, and formed of a material different from that of the solid hydrogen fuel 102. In addition, the heating promoter 104 has a higher reactivity or higher reaction heat with water than the solid hydrogen fuel 102. The heating promoter 104 may be integrally formed on the solid hydrogen fuel 102 or attached to the solid hydrogen fuel 102 by adhesive or compression strength means.

In one embodiment, the heating promoter 104 releases hydrogen when reacting with water. For example, the heating promoter 104 may include Li, LiAlH₄, LiBH₄, Na, NaAlH₄, K, KAlH₄, KBH₄, NH₃BH₃, NaSi, or combinations thereof. The advantage of the heating promoter 104 described previously is that it can not only increase the temperature of the solid hydrogen fuel 102 but also increase the hydrogen releasing amount of the hydrogen supplying device. In another embodiment, the heating promoter 104 releases no hydrogen when reacting with water but simply increases the temperature of the hydrogen supplying device. For example, the heating promoter 104 may include Mg, MgO, Al, CaO, or combinations thereof. In one embodiment, the solid hydrogen fuel with an initial heating mechanism includes 1 to 500 parts by weight of the heating promoter 104, based on 100 parts by weight of the solid hydrogen fuel 102. However, the amount of the heating promoter 104 may be varied according to the required temperature and hydrogen releasing rate.

The solid hydrogen fuel may include metal boron hydride, metal hydride, boron nitrogen hydride, or combinations thereof. The metal boron hydride may be such as NaBH₄, LiBH₄, Ca(BH₄)₂, Mg(BH₄)₂, KBH₄, Al(BH₄)₃, or combinations thereof. The metal hydride may be such as LiH, NaH, or CaH. The boron nitrogen hydride may be such as ammonia borane, diborane, diamino diborane, H₂B(NH₃)₂BH₄, poly(amino borane), borazine, borane-morpholine complex, borane-tetrahydrofuran complex, or combinations thereof. The boron nitrogen hydride may be such as BₓN_{y}H_{z} compounds including H₃BNH₃, H₂B(NH₃)₂BH₄, polyamine borane, B₃N₃H₆, borane-tetrahydrofuran complex, ethylborane (B₂H₆), or combinations thereof. In a preferred embodiment, the solid hydrogen fuel includes a solid catalyst with or without a polymeric elastomer. The solid catalyst may be such as Ru, Co, Ni, Cu, Fe, or combinations thereof. In another embodiment, the solid catalyst may be powder of Ru/resin, Co/resin, Ni/resin, Cu/resin, or Fe/resin. The hydrophobic polymeric elastomer may be such as silicone, rubber, or silicone rubber.

Fig. 2 illustrates a heating promoter 204 disposed on the solid hydrogen fuel 102 according to another embodiment of the invention. First, the solid hydrogen fuel 102 is formed. Then, before the solid hydrogen fuel 102 is dried, the heating promoter 204, in a form of particles, are adhered to the solid hydrogen fuel 102. The solid hydrogen fuel 102 with the heating promoter 204 adhered thereon is then oven dried. A particle size of the heating promoter 204 is between 0.1 µm and 1000 µm. In addition, the heating promoter 204 can be adhered to the solid hydrogen fuel 102 by rolling the undried solid hydrogen fuel 102 on the heating promoter particles. In another embodiment, an adhesive can be used so that the heating promoter 204 is adhered to the solid hydrogen fuel 102. For example, the adhesive may be resin, clay, glue, silicone, rubber, or silicone rubber.

In one embodiment, the heating promoter 204 releases hydrogen when reacting with water. For example, the heating promoter 204 may include Li, LiAlH₄, LiBH₄, Na, NaAlH₄, K, KAlH₄, KBH₄, NH₃BH₃, NaSi, or combinations thereof. The advantage of the heating promoter 204 described previously is that it can not only increase the temperature of the solid hydrogen fuel but also increase the hydrogen releasing amount of the hydrogen supplying device. In another embodiment, the heating promoter 204 releases no hydrogen when reacting with water but simply increases the temperature of the solid hydrogen fuel. For example, the heating promoter 204 may include Mg, MgO, Al, CaO, or combinations thereof. In one embodiment, the heating promoter 204 and the solid hydrogen fuel are made of the same material. In another embodiment, the heating promoter 204 and the solid hydrogen fuel are made of different materials, and the heating promoter 204 has a higher reactivity or reaction heat with water than the solid hydrogen fuel 102.

In one embodiment, the solid hydrogen fuel with an initial heating mechanism includes 1 to 500 parts by weight of the heating promoter 104, based on 100 parts by weight of the solid hydrogen fuel 102. However, the amount of the heating promoter 104 may be varied according to the required temperature and hydrogen releasing rate.

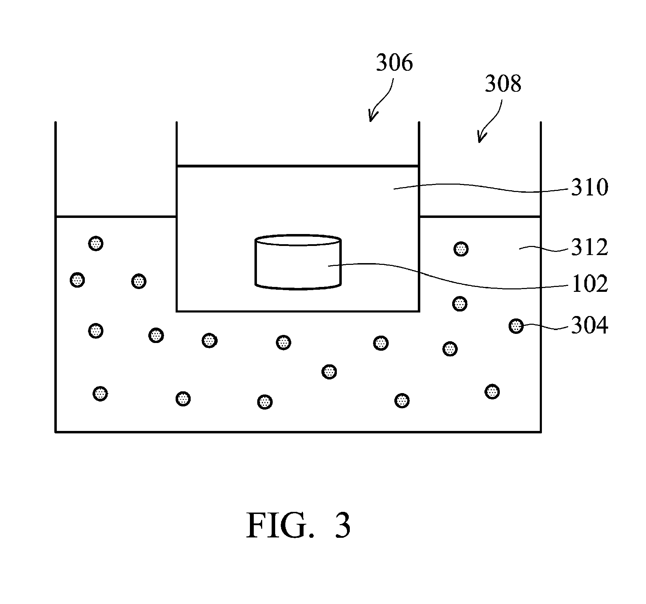

Fig. 3 illustrates a heating promoter 304 disposed outside of the solid hydrogen fuel 102 according to a further embodiment of the invention. First, the solid hydrogen fuel 102 is formed. Then, the solid hydrogen fuel 102 is disposed in a reaction region 306 with water 310 therein. Alternatively, the heating promoter 304 is disposed in a heating region 308 with water 312 therein. A particle size of the heating promoter 304 is between 0.1 µm and 1000 µm.

In one embodiment, the heating promoter 304 releases hydrogen when reacting with water. For example, the heating promoter 304 may include Li, LiAlH₄, LiBH₄, Na, NaAlH₄, K, KAlH₄, KBH₄, NH₃BH₃, NaSi, or combinations thereof. The advantage of the heating promoter 304 described previously is that it can not only increase the temperature of a hydrogen supplying device but also increase the hydrogen releasing amount of the hydrogen supplying device. In another embodiment, the heating promoter 304 releases no hydrogen when reacting with water. For example, the heating promoter 304 may include Mg, MgO, Al, CaO, or combinations thereof. In one embodiment, the heating promoter 304 and the solid hydrogen fuel are made of the same material. In another embodiment, the heating promoter 304 and the solid hydrogen fuel are made of different material, and the heating promoter 304 has a higher reactivity or reaction heat with water than the solid hydrogen fuel 102.

In one embodiment, the solid hydrogen fuel with an initial heating mechanism includes 1 to 500 parts by weight of the heating promoter 104, based on 100 parts by weight of the solid hydrogen fuel 102. However, the amount of the heating promoter 104 may be varied according to the required temperature and hydrogen releasing rate.

The solid hydrogen fuel in Fig. 1 is preferably used when only a single surface of the solid hydrogen fuel is to be contacted with water in a hydrogen supplying device. The solid hydrogen fuel in Fig. 2 is preferably used when all surfaces of the solid hydrogen fuel is to be contacted with water in a hydrogen supplying device. The solid hydrogen fuel in Fig. 3 is preferably used when the solid hydrogen fuel may be affected by the heating promoter that may result in a decrease of the original hydrogen releasing rate of the solid hydrogen fuel.

In general, in a hydrogen supplying device, a solid hydrogen fuel contacts with water resulting in a hydrolysis reaction to release hydrogen and heat. The released heat then raises the temperature of the solid hydrogen fuel and results in an increase of the hydrogen releasing rate. In other words, a conventional hydrogen supplying device needs a certain period of time to reach a desired temperature. However, in the above described embodiments of the invention, the hydrogen supplying device includes the solid hydrogen fuel with an initial heating mechanism. The solid hydrogen fuel with an initial heating mechanism includes a heating promoter that can proceed with an exothermal reaction when reacting with water. Therefore, when the hydrogen supplying device is turned on, the temperature of the solid hydrogen fuel can increase rapidly to reach a desired hydrogen releasing rate, thereby considerably reducing the turn-on time.

In another embodiment, a solid hydrogen fuel of a hydrogen supplying device is in contact with an electrical heating element to increase the initial hydrogen releasing rate of the hydrogen supplying device. The electrical heating element may be metal meshes, heating resistors, heating plates, heating chips, or combinations thereof.

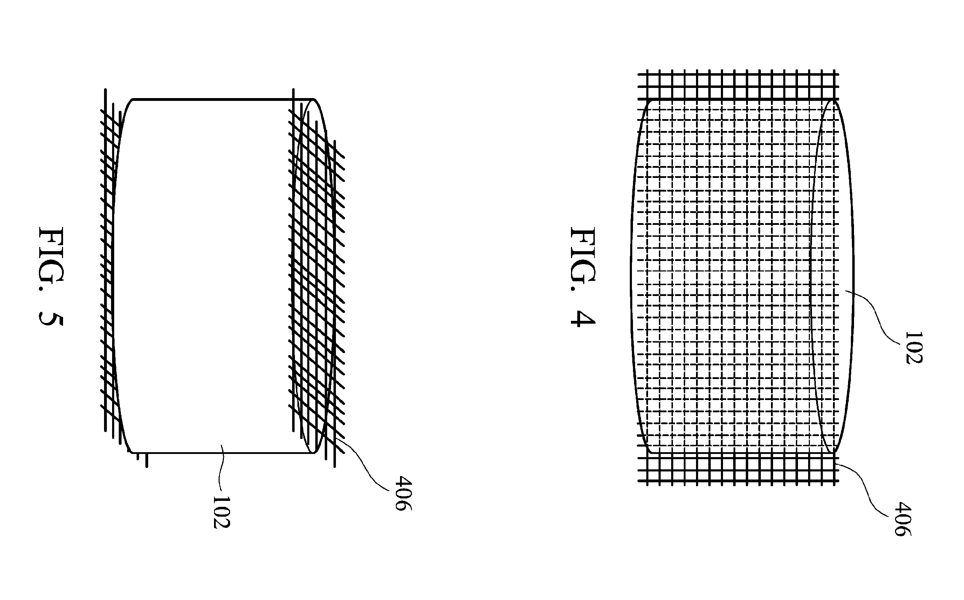

Fig. 4 illustrates an electrical heating metal mesh 406 embedded within a solid hydrogen fuel 102 according to one embodiment of the invention. That is, the electrical heating metal mesh 406 is embedded in the solid hydrogen fuel 102 during its formation. The electrical heating metal mesh 406 may be a nickel chromium wire mesh. The material and the operating current of the electrical heating metal mesh 406 can be adjusted by those skilled in the art according to required turn-on time and hydrogen releasing rate.

Fig. 5 illustrates an electrical heating metal mesh 406 which covers a top surface and a bottom surface of a solid hydrogen fuel 102 according to one embodiment of the invention. In another embodiment, the electrical heating metal mesh 406 covers only one surface of the solid hydrogen fuel. The electrical heating metal mesh 406 may be a nickel chromium wire mesh.

The solid hydrogen fuel with an initial heating mechanism of the invention can be applied to any existing or future developed hydrogen supplying device. For example, references of hydrogen supplying devices can be made to United State Patent 6,737,184, 7,763,388, or US 7,419,518.

Compared to conventional hydrogen supplying devices, the hydrogen supplying device including the electrical heating element is not limited by the initial reaction rate between the solid hydrogen fuel and water. Instead, the reaction temperature can be rapidly increased by electrical heating, such that the time required for reaching a desired hydrogen releasing rate is reduced.

The hydrogen supplying device of the invention includes a solid hydrogen fuel with an initial heating mechanism. Whether a heating promoter or an electrical heating element is used, the required time for achieving a desired power rate is reduced. In a preferred embodiment, the solid hydrogen fuel with an initial heating mechanism can achieve a desired hydrogen releasing rate, such as 40 sccm, in 1 minute. The amount of the heating promoter used in the hydrogen supplying device can be adjusted according to product demands. In addition, the solid hydrogen fuel of the invention is also applicable in a low temperature environment, and applications of hydrogen supplying devices may be accordingly broadened.

### Example 1

The solid hydrogen fuel 102 was formed by the following steps:

1. 1 g of NaBH₄ and 0.015 g of Ru-Al₂O₃ catalyst powder were placed in an agate mortar and mixed evenly.

2. The fuel powder from step 1 was placed into a mold and pressed (2 tons force) by an oil hydraulic press for 1 minute. A cylinder fuel tablet was then obtained.

3. 9 g of DI water was added into a reaction flask, and the fuel tablet was also added into the reaction flask. The reaction flask was placed in a plastic sealed box to perform a hydrogen releasing reaction.

4. A gas mass flow controller and a K type thermocouple were used to measure and record the gas flow and liquid temperature during the experiment.

5. The experiment continued until no further hydrogen was released.

The heating promoter 104 (e.g. NaSi tablet) was formed by the following steps:

1. 1 g of NaBH₄ and 0.015 g of Ru-Al₂O₃ catalyst powder were placed in an agate mortar and mixed evenly.

2. The fuel powder from step 1 was placed into a mold and pressed (2 tons force) by an oil hydraulic press for 1 minute. A cylinder fuel tablet was then obtained.

3. 1.35 g of NaSi was placed into a mold and pressed (2 tons force) by an oil hydraulic press for 1 minute. A cylinder NaSi tablet was then obtained.

4. The NaSi tablet and the fuel tablet were stacked in a reaction flask (as shown in Fig. 1). Then, 9 g of DI water was added into the reaction flask. The reaction flask was placed in a plastic sealed box to perform a hydrogen releasing reaction.

5. A gas mass flow controller and a K type thermocouple were used to measure and record the gas flow and liquid temperature during the experiment.

6. The experiment continued until no further hydrogen was released.

### Example 2

The solid hydrogen fuel 102 was formed by the following steps:

1. 1 g of NaBH₄ and 0.015 g of Ru-Al₂O₃ catalyst powder were placed in an agate mortar and mixed evenly.

2. The fuel powder from step 1 was placed into a mold and pressed (2 tons force) by an oil hydraulic press for 1 minute. A cylinder fuel tablet was then obtained.

3. 9 g of DI water was added into a reaction flask, and the fuel tablet was also added into the reaction flask. The reaction flask was placed in a plastic sealed box to perform a hydrogen releasing reaction.

4. A gas mass flow controller and a K type thermocouple were used to measure and record the gas flow and liquid temperature during the experiment.

5. The experiment continued until no further hydrogen was released.

The heating promoter 104 (e.g. NaSi tablet) was formed (by coating) by the following steps:

1. 1 g of NaBH₄ and 0.015 g of Ru-Al₂O₃ catalyst powder were placed in an agate mortar and mixed evenly.

2. The fuel powder from step 1 was placed into a mold and pressed (2 tons force) by an oil hydraulic press for 1 minute. A cylinder fuel tablet was then obtained.

3. 1.35 g of NaSi was weighted.

4. The fuel tablet was placed into a reaction flask. The NaSi particles were then coated onto the fuel tablet, such that the NaSi particles were distributed around and on the top surface of the fuel tablet (as shown in Fig. 2). Then, 9 g of DI water was added into the reaction flask. The reaction flask was placed in a plastic sealed box to perform a hydrogen releasing reaction.

5. A gas mass flow controller and a K type thermocouple were used to measure and record the gas flow and liquid temperature during the experiment.

6. The experiment continued until no further hydrogen was released.

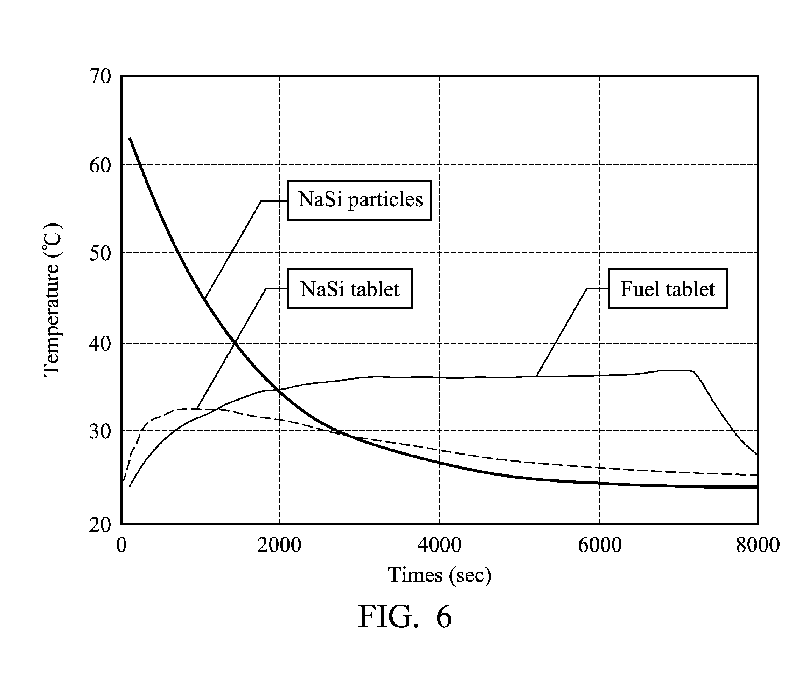

Fig. 6 illustrates the temperature of the solid hydrogen fuel with or without having the heating promoters thereon according to Example 1 and Example 2. Referring to Fig. 6, the initial temperature of the solid hydrogen fuel having the heating promoters thereon increased remarkably. Therefore, the solid hydrogen fuel having the heating promoters thereon had higher initial hydrogen releasing rate than the conventional one.

### Example 3

In this example, solid hydrogen fuel of a hydrogen supplying device was in contact with an electrical heating element to increase the initial hydrogen releasing rate of the hydrogen supplying device, wherein the electrical heating element was a heating metal mesh. The experiment was proceeded by the following steps:

1. 0.91 g of NaBH₄, 0.13 g of Co/resin catalyst, and 0.45 g of silicone were mixed, ball-milled, and then pressed to form a fuel tablet.

2. A heating resistor was placed on one side of the fuel tablet, and two absorbent cotton films were used to cover two sides of the fuel tablet. Then, an iron grid was disposed on the absorbent cotton films as a support. Next, a heat shrinkable film was placed to encapsulate the entire fuel tablet.

3. The encapsulated fuel tablet was disposed to a fixture and a heating electrical power source was connected thereto. A thermometer was used to measure the temperature of the fuel tablet.

4. 3 mL of water was added into the fixture. The fuel tablet released hydrogen when contacting with water.

5. The power was turned off after the hydrogen was released for 300 secs.

6. The hydrogen releasing rate of the hydrogen supplying device was recorded during the process.

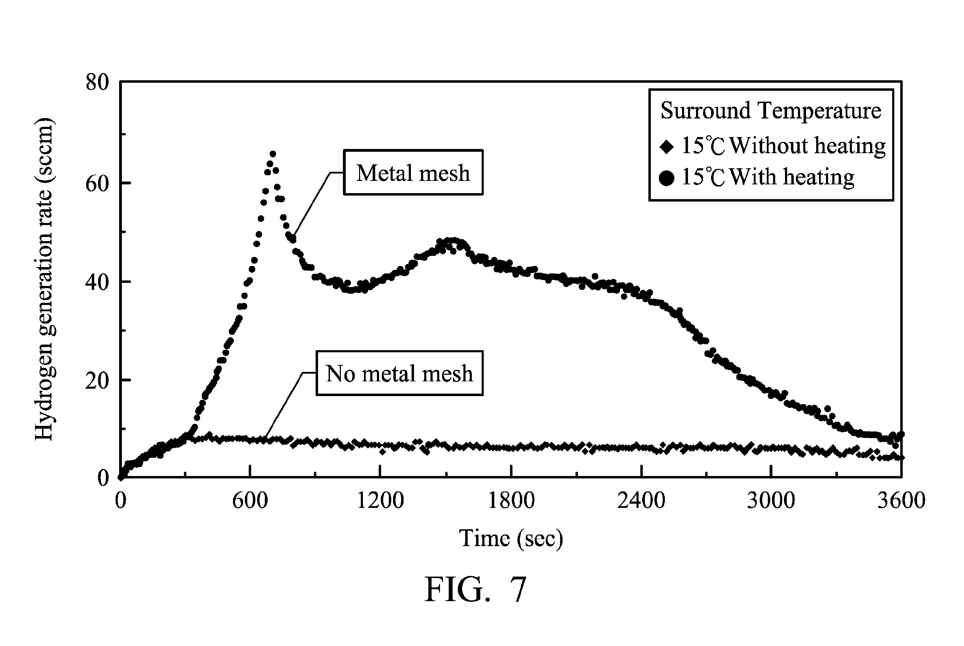

Fig. 7 illustrates the hydrogen releasing rate of the solid hydrogen fuel with or without having the electrical heating element at an environment temperature of 15°C. Referring to Fig. 7, the initial hydrogen releasing rate of the solid hydrogen fuel having the electrical heating element was remarkably higher than the conventional one.

### Comparative Example 1

1. 0.91 g of NaBH₄, 0.13 g of Co/resin catalyst, and 0.45 g of silicone were mixed, ball-milled, and then pressed to form a fuel tablet.

2. Two absorbent cotton films were used to cover two sides of the fuel tablet. Then, an iron grid was disposed on the absorbent cotton films as a support. Next, a plastic film was used to encapsulate the entire fuel tablet.

3. The encapsulated fuel tablet was disposed to a fixture and placed into a constant temperature cabinet for 30 min to reach a desired temperature.

4. 3 mL of water was at a desired constant temperature.

5. 3 mL of the water was added into the fixture at the desired temperature. The fuel tablet released hydrogen when contacting with water. The hydrogen releasing rate and time were recorded during the process.

6. The steps described previously was repeated, wherein the desired temperature was set to be 15°C, 25°C, and 35°C respectively.

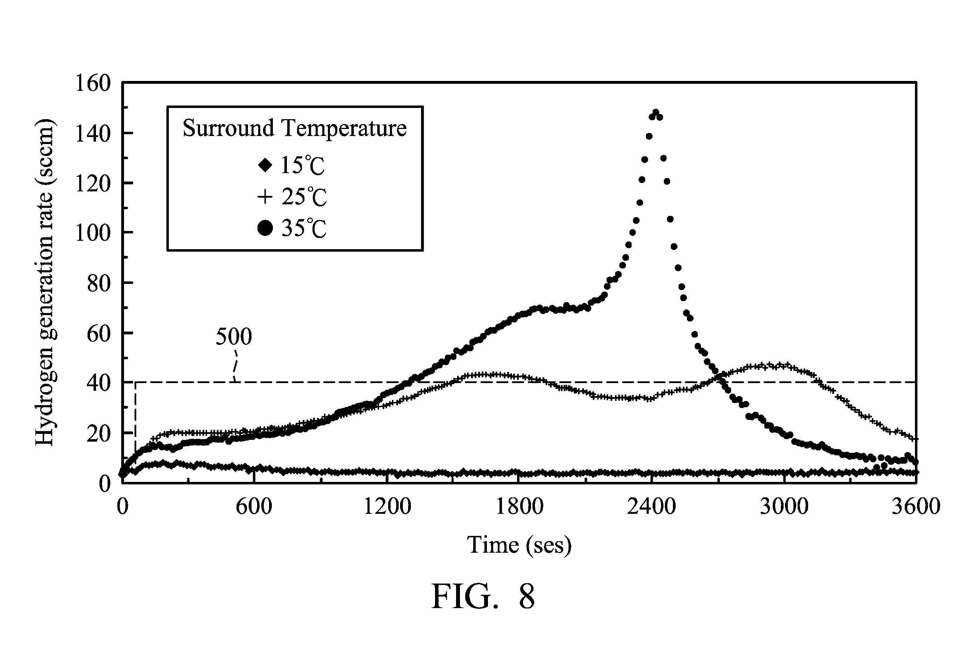

Fig. 8 illustrates the hydrogen releasing rate of the conventional hydrogen supplying device at the environment temperature of 15°C, 25°C, and 35°C respectively. Referring to Fig. 8, the dotted line 500 represents an ideal hydrogen releasing rate. As shown in Fig. 8, when the environment temperature was below 35°C, the initial hydrogen releasing rate of the conventional hydrogen supplying device was too slow because its hydrogen releasing rate relied on the heat released by itself. Therefore, before the first 600 sec, the hydrogen releasing rate was lower that 40 sccm, which would not meet industrial requirements.

Moreover, as shown in Fig. 7, the solid hydrogen fuel having the electrical heating element provided a peak value at the beginning of the hydrogen releasing process. That is, when the reaction began, the solid hydrogen fuel with an initial heating mechanism provided a larger pressure to the hydrogen supplying device that could also purge impure gas out of the system.

### Example 4

The heating promoter (e.g. NaSi tablet) was formed in a region outside of the original reaction region by the following steps:

1. 1 g of NaBH₄ and 0.015 g of Ru-Al₂O₃ catalyst powder were placed in an agate mortar and mixed evenly.

2. The fuel powder from step 1 was placed into a mold and pressed (2 tons force) by an oil hydraulic press for 1 minute. A cylinder fuel tablet was then obtained.

3. 1 g of NaSi was weighted.

4. A reaction flask was placed in a 50 mL beaker. 9 g of water was added into the reaction flask and the beaker respectively.

5. The fuel tablet was added into the reaction flask, and the NaSi was added into the beaker (that is, heat was provided to the reaction region from the outside, as shown in Fig. 3). The beaker was disposed inside a plastic sealed box for a hydrogen releasing reaction.

6. A gas mass flow controller and a K type thermocouple were used to measure and record the gas flow and liquid temperature during the experiment.

7. The experiment continued until no further hydrogen was released.

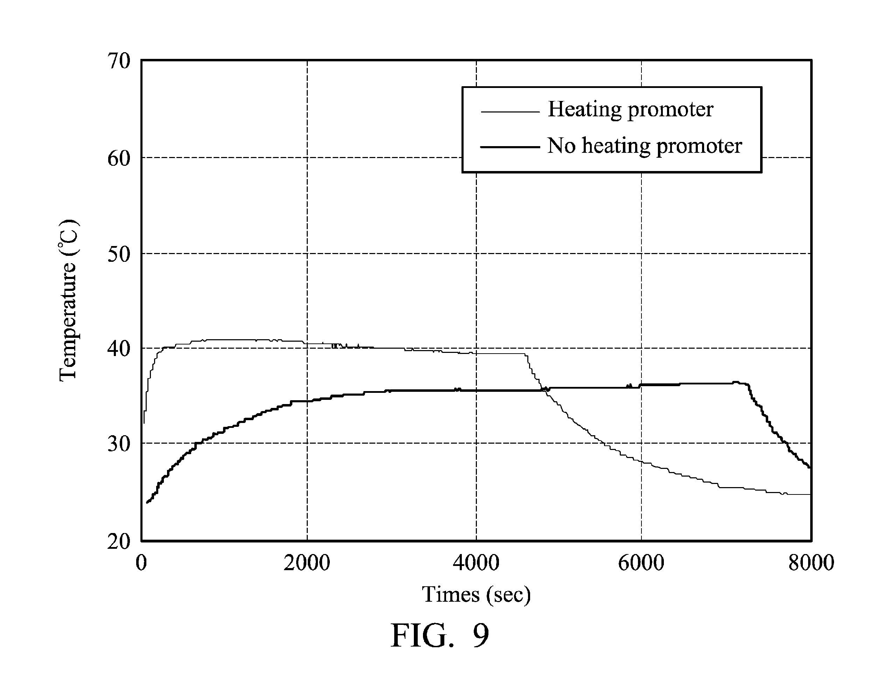

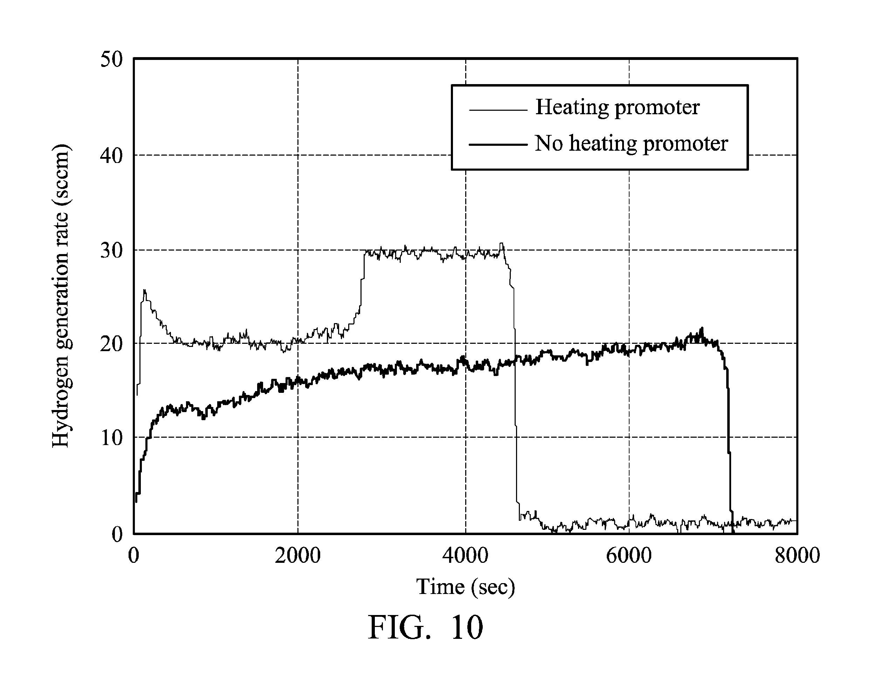

Figs. 9 and 10 illustrate the temperature and the hydrogen releasing rate of the solid hydrogen fuel with or without having the heating promoter. Referring to Fig. 9, the initial temperature of the solid hydrogen fuel having the heating promoter increased rapidly. Therefore, referring to Fig. 10, the initial hydrogen releasing rate of the solid hydrogen fuel having the heating promoter was much higher than the conventional one.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A solid hydrogen fuel with an initial heating mechanism, comprising
a solid hydrogen fuel; and
a heating promoter disposed on at least one surface of the solid hydrogen fuel,
wherein the heating promoter proceeds with an exothermal reaction
when contacted with water.

2. The solid hydrogen fuel with an initial heating mechanism as claimed in claim 1, wherein the heating promoter comprises a film coated on the solid hydrogen fuel, and the heating promoter is different from the solid hydrogen fuel.

3. The solid hydrogen fuel with an initial heating mechanism as claimed in claim 1, wherein the heating promoter comprises particles which are adhered to the solid hydrogen fuel.

4. The solid hydrogen fuel with an initial heating mechanism as claimed in claim 3, wherein a particle size of the heating promoter is between 0.1 µm and 1000 µm.

5. The solid hydrogen fuel with an initial heating mechanism as claimed in claim 1, wherein the solid hydrogen fuel comprises metal boron hydride, metal hydride, boron nitrogen hydride, or combinations thereof.

6. The solid hydrogen fuel with an initial heating mechanism as claimed in claim 1, wherein the heating promoter has a higher reactivity with water than the solid hydrogen fuel.

7. The solid hydrogen fuel with an initial heating mechanism as claimed in claim 1, wherein the heating promoter exhibits larger reaction heat with water than the solid hydrogen fuel.

8. The solid hydrogen fuel with an initial heating mechanism as claimed in claim 1, wherein the heating promoter releases hydrogen when reacting with water.

9. The solid hydrogen fuel with an initial heating mechanism as claimed in claim 8, wherein the heating promoter comprises Li, LiAlH₄, LiBH₄, Na, NaAlH₄, K, KAlH₄, KBH₄, NH₃BH₃, NaSi, or combinations thereof.

10. The solid hydrogen fuel with an initial heating mechanism as claimed in claim 1, wherein the heating promoter releases no hydrogen when reacting with water.

11. The solid hydrogen fuel with an initial heating mechanism as claimed in claim 10, wherein the heating promoter comprises Mg, MgO, Al, CaO, or combinations thereof.

12. The solid hydrogen fuel with an initial heating mechanism as claimed in claim 1, wherein the solid hydrogen fuel with an initial heating mechanism comprises 1 to 500 parts by weight of the heating promoter, based on 100 parts by weight of the solid hydrogen fuel.

13. A solid hydrogen fuel with an initial heating mechanism, comprising
a solid hydrogen fuel; and
a heating promoter disposed outside of the solid hydrogen fuel, wherein the heating promoter proceeds with an exothermal reaction when contacted with water to serve as a heating source.

14. The solid hydrogen fuel with an initial heating mechanism as claimed in claim 13, wherein the solid hydrogen fuel comprises metal boron hydride, metal hydride, boron nitrogen hydride, or combinations thereof.

15. The solid hydrogen fuel with an initial heating mechanism as claimed in claim 13, wherein the heating promoter has a higher reactivity with water than the solid hydrogen fuel.

16. The solid hydrogen fuel with an initial heating mechanism as claimed in claim 1, wherein the heating promoter exhibits larger reaction heat with water than the solid hydrogen fuel.

17. The solid hydrogen fuel with an initial heating mechanism as claimed in claim 13, wherein the heating promoter comprises Li, LiAlH₄, LiBH₄, Na, NaAlH₄, K, KAlH₄, KBH₄, NH₃BH₃, NaSi, or combinations thereof.

18. The solid hydrogen fuel with an initial heating mechanism as claimed in claim 13, wherein the solid hydrogen fuel with an initial heating mechanism comprises 1 to 500 parts by weight of the heating promoter, based on 100 parts by weight of the solid hydrogen fuel.

19. A solid hydrogen fuel with an initial heating mechanism, comprising
a solid hydrogen fuel; and
an electrical heating element in contact with the solid hydrogen fuel.

20. The solid hydrogen fuel with an initial heating mechanism as claimed in claim 19, wherein the solid hydrogen fuel comprises metal boron hydride, metal hydride, boron nitrogen hydride, or combinations thereof.

21. The solid hydrogen fuel with an initial heating mechanism as claimed in claim 19, wherein the electrical heating element comprises metal meshes, heating resistors, heating plates, heating chips, or combinations thereof.

22. The solid hydrogen fuel with an initial heating mechanism as claimed in claim 19, wherein the electrical heating element is embedded within the solid hydrogen fuel.

23. The solid hydrogen fuel with an initial heating mechanism as claimed in claim 19, wherein the electrical heating element covers at least one surface of the solid hydrogen fuel.

24. The solid hydrogen fuel with an initial heating mechanism as claimed in claim 19, wherein the electrical heating element covers a top surface and a bottom surface of the solid hydrogen fuel.
